# EUROPÄISCHE PATENTSCHRIFT

(11) **EP 1 570 111 B1**
(45) Veröffentlichungstag und Bekanntmachung des Hinweises auf die Patenterteilung: **06.08.2008**
(21) Anmeldenummer: 03789201.5
(22) Anmeldetag: 10.12.2003
(51) Int. Cl.: C25B 1/12, C25B 15/00, C25B 15/08

(54) **DRUCKELEKTROLYSEUR UND VERFAHREN ZUR ABSCHALTUNG EINES DRUCKELEKTROLYSEURS**
PRESSURE ELECTROLYZER AND METHOD FOR SWITCHING OFF A PRESSURE ELECTROLYZER
DISPOSITIF D'ELECTROLYSE SOUS PRESSION ET SON PROCEDE D'ARRET

(30) Priorität: 14.12.2002 DE 10258525
(43) Veröffentlichungstag der Anmeldung: 07.09.2005
(73) Patentinhaber: Hydrogen Technologies AS, 3674 Notodden (NO)
(72) Erfinder: BRAND, Rolf, August, 83052 Bruckmühl (DE); WALLEVIK, Oddmund, N-3711 Skien (NO)
(74) Vertreter: Lajer, Dorte
(86) Internationale Anmeldenummer: PCT/EP2003/013993
(87) Internationale Veröffentlichungsnummer: WO 2004/055242

(56) Entgegenhaltungen:
- WO-A-03/033768
- DE-A- 3 603 244
- DE-A- 3 837 354
- DE-A- 19 901 884

## Beschreibung

Die Erfindung betrifft einen Druckelektrolyseur nach dem Oberbegriff des Anspruchs 1, sowie ein Verfahren zur Abschaltung eines Druckelektrolyseurs nach dem Oberbegriff des Anspruchs 9.

Zur elektrolytischen Aufspaltung von Wasser in Wasserstoff und Sauerstoff sind Druckelektrolyseure bekannt, die einen Druckbehälter und einen eine Anzahl von in Form eines Stapels zusammengefassten Elektrolysezellen enthaltenden, in dem Druckbehälter angeordneten Elektrolysezellenblock umfassen. Die Elektrolysezellen enthalten jeweilige Anoden und Kathoden und es ist ein Elektrolytkreislaufsystem zur Zuführung von Elektrolyt zu den Anoden und Kathoden vorgesehen. Ein Sauerstoffabscheider dient zum Abscheiden des beim Betrieb des Druckelektrolyseurs entstehenden gasförmigen Sauerstoffs und ein Wasserstoffabscheider dient zum Abscheiden des beim Betrieb des Druckelektrolyseurs entstehenden gasförmigen Wasserstoffs. Zum Inertisieren des Druckelektrolyseurs bei dessen Abschaltung ist ein Vorrat eines inerten Gases, insbesondere Stickstoff, vorgesehen.

Ein Druckelektrolyseur herkömmlicher Art ist beispielsweise aus der DE 25 48 699 C3 bekannt.

Bei Druckelektrolyseuren der genannten Art besteht eine wesentliche Sicherheitsanforderung in der Fähigkeit zu einer schnellen, zuverlässigen und umfassenden Inertisierung, das heißt, einer Entfernung des Wasserstoffs aus dem Druckbehälter und aus dem Wasserstoffabscheider, so dass der Restgehalt an Wasserstoff deutlich unter der unteren Explosionsgrenze von 4 Vol.% liegt.

Herkömmlich werden zum Inertisieren größere Mengen an Inertgas, typischerweise Stickstoff, vorgehalten, mit dem der Wasserstoff beim Abschalten, etwa bei einer Notabschaltung, aus dem Wasserstoffabscheider gespült wird. Hierzu kann entweder der Druck im Druckelektrolyseur beibehalten oder im Zuge der Spülung mit dem Inertgas ein Druckabbau auf den Umgebungsdruck erfolgen. In jedem Fall muss wegen der Vermischung der Gase ein Vielfaches des Gasvolumens des Wasserstoffabscheiders in Form von Inertgas vorgehalten werden.

Da bei einer schnellen Dekompression des Elektrolyseurs durch das Ausgasen von Wasserstoff bzw. von Sauerstoff in versteckten Kavernen typischerweise Schäden in den Dichtungen und Baukomponenten der Zellen entstehen und ein späteres Wiederanfahren der drucklosen Anlage mit großem Aufwand verbunden ist, sollte eine Dekompression des Elektrolyseurs möglichst auf drei Arten von Störfällen beschränkt werden, bei denen sie tatsächlich unumgänglich ist: Leckage von Elektrolyt, Leckage von Produktgas und kritische Verunreinigung von Produktgas. Sonst sollte der Druck beim Abschalten immer beibehalten werden.

Die DE-A-1990884 beschreibt ein Verfahren zur Notabschaltung einer Druckelektrolyseanlage, welche wenigstens einen Wasserstoff-Abscheider und einen mit diesem über eine kommunizierende Leitung verbundenen Sauerstoff-Abscheider aufweist, bei dem die in den Abscheidern enthaltenen Gase entspannt werden und der Wasserstoff-Abscheider mit Stickstoff befüllt und/oder gespült wird.

Die Aufgabe der Erfindung ist es einen Druckelektrolyseur und ein Verfahren zur Abschaltung eines Druckelektrolyseurs zu schaffen, bei denen mit einer möglichst geringen Menge an Inertgas eine zuverlässige Inertisierung des Elektrolyseurs möglich ist. Insbesondere, jedoch nicht ausschließlich, soll eine Abschaltung des Elektrolyseurs auch ohne Dekompression möglich sein.

Vorrichtungsmäßig wird die gestellte Aufgabe durch einen Druckelektrolyseur mit den Merkmalen des Anspruchs 1 gelöst.

Verfahrensmäßig wird die gestellte Aufgabe durch ein Verfahren mit den Merkmalen des Anspruchs 9 gelöst.

Vorteilhafte Ausgestaltungen der Erfindung sind in den jeweiligen Unteransprüchen angegeben.

Durch die Erfindung wird ein Druckelektrolyseur mit einem Druckbehälter und einem eine Anzahl von Elektrolysezellen enthaltenden, in dem Druckbehälter angeordneten Elektrolysezellenblock geschaffen. Die Elektrolysezellen enthalten jeweilige Anoden und Kathoden und es ist ein Elektrolysekreislaufsystem zur Zuführung von Elektrolyt zu den Anoden und Kathoden vorgesehen. Zum Abscheiden des beim Betrieb des Druckelektrolyseurs entstehenden gasförmigen Sauerstoffs ist ein Sauerstoffabscheider vorgesehen und zum Abscheiden des beim Betrieb des Druckelektrolyseurs entstehenden-gasförmigen Wasserstoffs ist ein Wasserstoffabscheider vorgesehen. Ein Vorrat eines inerten Gases, insbesondere Stickstoff, dient zum Inertisieren des Druckelektrolyseurs bei seiner Abschaltung. Erfindungsgemäß ist der Inertgasvorrat dem Sauerstoffabscheider zuführbar und das Elektrolytkreislaufsystem enthält eine Leitungsverbindung, über die bei Beaufschlagung des Sauerstoffabscheiders mit dem Inertgas ein Teil des Elektrolyten im Sinne einer Verdrängung des gasförmigen Wasserstoffs aus dem Wasserstoffabscheider verschiebbar ist.

Gemäß einer Ausführungsform des erfindungsgemäßen Druckelektrolyseurs ist der Sauerstoffabscheider und/oder der Wasserstoffabscheider außerhalb des Druckbehälters vorgesehen, und bei Beaufschlagung des Sauerstoffabscheiders mit dem Inertgas ist ein Teil des Elektrolyten zur Verdrängung des Wasserstoffs aus dem Wasserstoffabscheider von dem Druckbehälter und/oder von dem Sauerstoffabscheider in den Wasserstoffabscheider verschiebbar.

Gemäß einer anderen bevorzugten Ausführungsform der Erfindung ist der Sauerstoffabscheider und/oder der Wasserstoffabscheider durch einen Teil des Volumens innerhalb des Druckbehälters gebildet, und bei Beaufschlagung des Sauerstoffabscheiders mit dem Inertgas ist ein Teil des Elektrolyten zur Verdrängung des Wasserstoffs, insbesondere innerhalb des Druckbehälters, in den den Wasserstoffabscheider bildenden Teil des Druckbehältervolumens verschiebbar.

Gemäß einer Ausführungsform der Erfindung ist die Leitungsverbindung, über die ein Teil des Elektrolyten im Sinne einer Verdrängung des Wasserstoffs aus dem Wasserstoffabscheider verschiebbar ist, außerhalb des Druckbehälters vorgesehen.

Hierbei kann die Leitungsverbindung durch eine unterhalb des Flüssigkeitsspiegels des Elektrolyten verlaufende, den Sauerstoffabscheider mit dem Wasserstoffabscheider verbindende Pendelleitung gebildet sein.

Gemäß einer alternativen Ausführungsform des erfindungsgemäßen Druckelektrolyseurs ist die Leitungsverbindung, über die ein Teil des Elektrolyten im Sinne einer Verdrängung des Wasserstoffs aus dem Wasserstoffabscheider verschiebbar ist, innerhalb des Druckbehälters vorgesehen.

Gemäß einer vorteilhaften Ausführungsform des erfindungsgemäßen Druckelektrolyseurs bildet das Gehäuse des Elektrolysezellenblocks zusammen mit dem Druckbehälter mindestens zwei voneinander getrennte Räume, welche Bestandteil des Elektrolytkreislaufssystems sind und die durch das Gehäuse gegen die Elektrolysezellen und durch den Druckbehälter gegen die Umgebung begrenzt sind, wobei einer der voneinander getrennten Räume Bestandteil eines Anolytkreisläufs und mit dem Sauerstoffabscheider verbunden ist und ein anderer der voneinander getrennten Räume Bestandteil eines Katholytkreislaufs und mit dem Wasserstoffabscheider verbunden ist.

Hierbei können die voneinander getrennten Räume durch Trennwände voneinander getrennt sein, die sich zwischen dem Gehäuse des Elektrolysezellenblocks und dem Druckbehälter erstrecken, und die Leitungsverbindung, über die ein Teil des Elektrolyten im Sinne einer Verdrängung des Wasserstoffs aus dem Wasserstoffabscheider verschiebbar ist, kann durch einen Durchgang in einem unterhalb des Flüssigkeitsspiegels des Elektrolyten liegenden Bereich der Trennwände gebildet sein.

Weiterhin wird durch die Erfindung ein Verfahren zum Abschalten eines Druckelektrolyseurs geschaffen, wobei der Druckelektrolyseur einen Druckbehälter und einen eine Anzahl von Elektrolysezellen umfassenden, in dem Druckbehälter angeordneten Elektrolysezellenblock enthält und die Elektrolysezellen jeweilige Anoden und Kathoden enthalten und ein Elektrolytkreislaufsystem zur Zuführung von Elektrolyt zu den Anoden und Kathoden vorgesehen ist. Ein Sauerstoffabscheider dient zum Abscheiden des beim Betrieb des Druckelektrolyseurs entstehenden gasförmigen Sauerstoffs und ein Wasserstoffabscheider dient zum Abscheiden des beim Betrieb des Druckelektrolyseurs entstehenden gasförmigen Wasserstoffs. Zum Inertisieren wird dem Druckelektrolyseur bei seiner Abschaltung ein inertes Gas, insbesondere Stickstoff, zugeführt. Erfindungsgemäß wird das Inertgas dem Sauerstoffabscheider zugeführt, und bei Beaufschlagung des Sauerstoffabscheiders mit dem Inertgas wird ein Teil des Elektrolyten über eine in dem Elektrolytkreislaufsystem vorgesehene Leitungsverbindung im Sinne einer Verdrängung des gasförmigen Wasserstoffs aus dem Wasserstoffabscheider verschoben.

Gemäß einer vorteilhaften Ausführungsform des erfindungsgemäßen Verfahrens ist der Sauerstoffabscheider und/oder der Wasserstoffabscheider außerhalb des Druckbehälters vorgesehen, und bei Beaufschlagung des Sauerstoffabscheiders mit dem Inertgas wird ein Teil des Elektrolyten zur Verdrängung des Wasserstoffs aus dem Wasserstoffabscheider von dem Druckbehälter und/oder von dem Sauerstoffabscheider in den Wasserstoffabscheider verschoben.

Gemäß einer anderen vorteilhaften Ausführungsform des erfindungsgemäßen Verfahrens ist der Sauerstoffabscheider und/oder der Wasserstoffabscheider durch einen Teil des Volumens innerhalb des Druckbehälters gebildet, und bei Beaufschlagung des Sauerstoffabscheiders mit dem Inertgas wird ein Teil des Elektrolyten zur Verdrängung des Wasserstoffs, insbesondere innerhalb des Druckbehälters, in den den Wasserstoffabscheider bildenden Teil des Druckbehältervolumens verschoben.

Im folgenden werden Ausführungsbeispiele der Erfindung anhand der Zeichnung erläutert.

Es zeigen:
Figur 1a) und 1b) in schematisierter Darstellung einen erfindungsgemäßen Druckelektrolyseur im Betriebszustand (Figur 1a)) bzw. im Abschaltzustand (Figur 1b));
Figur 2a) und 2b) in schematisierter Darstellung einen erfindungsgemäßen Druckelektrolyseur im Betriebszustand (Figur 2a)) bzw. im Abschaltzustand (Figur 2b)).

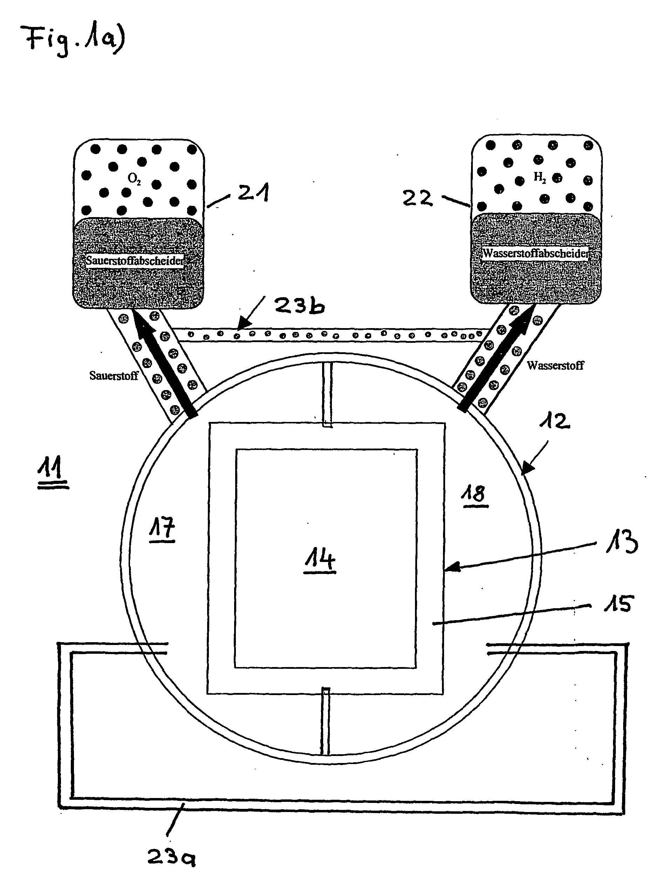

In den Figuren 1a), 1b), 2a) und 2b) umfasst ein insgesamt mit dem Bezugszeichen 11 bzw. 31 bezeichneter Druckelektrolyseur, der zur elektrolytischen Aufspaltung von Wasser in Wasserstoff und Sauerstoff dient, einen Druckbehälter 12 bzw. 32, in welchem ein Elektrolysenzellenblock 13 bzw. 33 angeordnet ist. Der Elektrolysezellenblock 13 bzw. 33 besteht aus einer Anzahl von in Form eines Stapels zusammengefasste Elektrolysezellen 14 bzw. 34, welche in den Figuren lediglich angedeutet sind. Die Elektrolysezellen 4 enthalten, was in den Figuren nicht eigens dargestellt ist, jeweils eine Anode und eine Kathode. Ein Elektrolytkreislaufsystem, welches in den Figuren nur teilweise dargestellt ist, dient der Zuführung von Elektrolyt zu den Anoden und Kathoden. Ein derartiger Elektrolyseur ist beispielsweise in der unveröffentlichten deutschen Patentanmeldung mit dem amtlichen Aktenzeichen 101 50 557.4 dargestellt.

Bei dem in den Figuren 1a) und 1b) dargestellten Ausführungsbeispiel sind außerhalb des Druckbehälters 12 ein Sauerstoffabscheider 21 zum Abscheiden des beim Betrieb des Druckelektrolyseurs 11 entstehenden gasförmigen Sauerstoffs und ein Wasserstoffabscheider 22 zum Abscheiden des beim Betrieb des Druckelektrolyseurs 11 entstehenden gasförmigen Wasserstoffs vorgesehen.

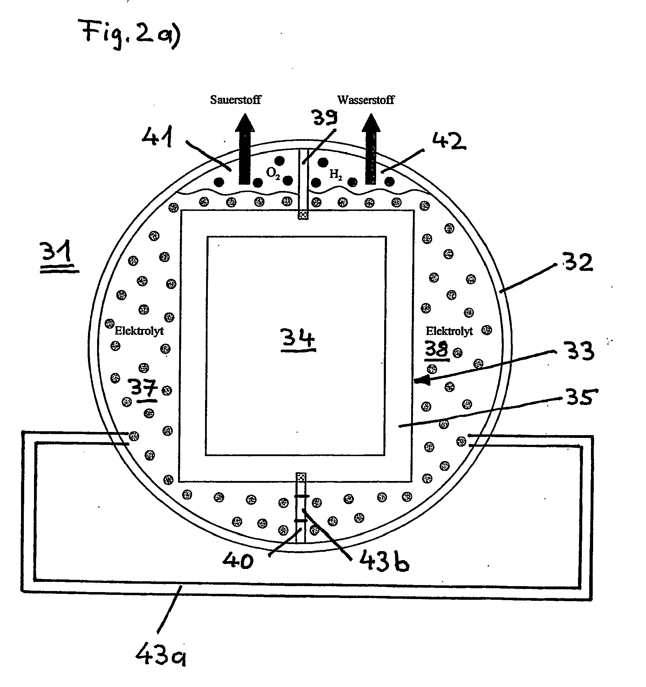

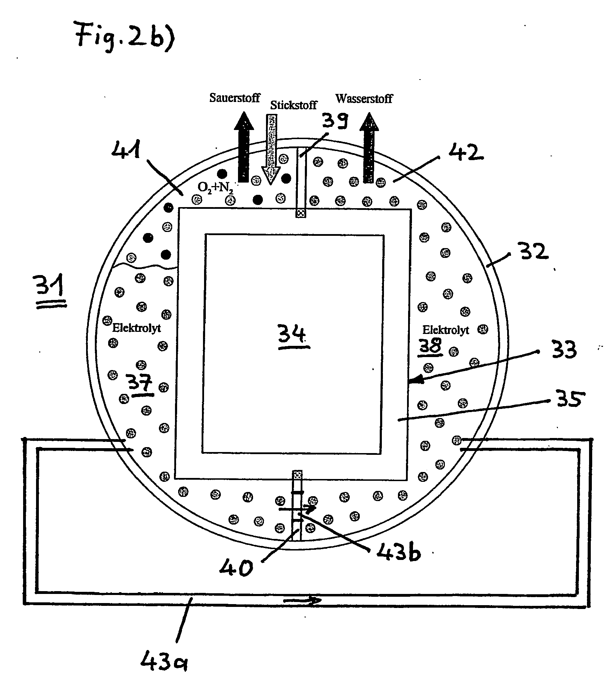

Bei dem in den Figuren 2a) und 2b) dargestellten Ausführungsbeispiel bildet das Gehäuse 35 des Elektrolysezellenblockes 33 zusammen mit dem Druckbehälter 32 zwei voneinander getrennte Räume 37, 38, die durch Trennwände 39, 40 voneinander getrennt sind, welche sich zwischen dem Gehäuse 35 des Elektrolysezellenblocks 33 und dem Druckbehälter 32 erstrecken. Die beiden voneinander getrennten Räume 37, 38 sind Bestandteile des Elektrolytkreislaufsystems und sind durch das Gehäuse 35 gegen die Elektrolysezellen 34 und durch den Druckbehälter 32 gegen die Umgebung begrenzt.

Durch einen Teil des Volumens innerhalb des Druckbehälters 32, welches über dem Elektrolysezellenblock 33 befindlich ist, ist ein Sauerstoffabscheider 41 zum Abscheiden des beim Betrieb des Druckelektrolyseurs 31 entstehenden gasförmigen Sauerstoffs gebildet und durch einen Teil des Volumens innerhalb des Druckbehälters 32, der ebenfalls über den Elektrolysezellenblock 33 befindlich ist, ist ein Wasserstoffabscheider 42 zum Abscheiden des beim Betrieb des Druckelektrolyseurs 31 entstehenden gasförmigen Wasserstoffs gebildet.

Von den beiden vorher genannten voneinander getrennten Räumen 37, 38, welche Bestandteil des Elektrolytkreislaufs sind, ist einer, nämlich der Raum 37 Bestandteil eine Anolytkreislaufs und mit dem dem Sauerstoffabscheider 41 bildenden Teil des Volumens innerhalb des Druckbehälters 32 verbunden, und der andere Raum 38 ist Bestandteil eines Katholytkreislaufs und mit dem den Wasserstoffabscheider 42 bildenden Teil des Volumens innerhalb des Druckbehälters 32 verbunden.

Bei allen dargestellten Ausführungsbeispielen ist ein Vorrat eines inerten Gases, insbesondere Stickstoff, zum Inertisieren des Druckelektrolyseurs 11 bzw. 31 bei seiner Abschaltung vorgesehen, der in den Figuren jedoch nicht eigens dargestellt ist. Dieses Inertgas dient dazu, den Druckelektrolyseur und insbesondere den Wasserstoffabscheider 22 bzw. 42 von Wasserstoff frei zu machen, zumindest soweit, dass der Wasserstoffgehalt unter der unteren Explosionsgrenze von 4 Vol.% liegt. Dieser Inertgasvorrat bzw. das vorgehaltene Inertgas ist allgemein gesprochen zu diesem Zwecke dem Sauerstoffabscheider 21 bzw. 41 in der Weise zuführbar, dass bei Beaufschlagung des Sauerstoffabscheiders 21 bzw. 41 mit dem Inertgas ein Teil des Elektrolyten innerhalb des Elektrolytkreislaufs so verschoben wird, dass der gasförmige Wasserstoff aus dem Wasserstoffabscheider 22 bzw. 42 verdrängt wird. Der verdrängte Wasserstoff wird dabei beispielsweise an die Umgebung abgeführt, gespeichert oder in anderer Weise entfernt.

Damit der Elektrolyt innerhalb des Elektrolytkreislaufsystems in dem oben beschriebenen Sinne einer Verdrängung des gasförmigen Wasserstoffs aus dem Wasserstoffabscheider 22 bzw. 42 verschiebbar ist, ist in dem Elektrolytkreislaufsystem eine Leitungsverbindung 23a; 23b; 43a; 43b vorgesehen, welche auf unterschiedliche Art ausgeführt sein kann.

Bei dem in den Figuren 1a) und 1b) dargestellten Ausführungsbeispiel ist die genannte Leitungsverbindung außerhalb des Druckbehälters 12 vorgesehen, wobei zwei verschiedene Varianten gleichzeitig dargestellt sind. So kann die außerhalb des Druckbehälters 12 verlaufende Leitungsverbindung entweder durch eine Leitungsverbindung 23a gebildet sein, welche einen dem Sauerstoffabscheider 21 zugeordneten Volumenbereich innerhalb des Druckbehälters 12 mit einem den Wasserstoffabscheider 22 zugeordneten Volumenbereich innerhalb des Druckbehälters 12 verbindet, oder sie kann durch eine den Sauerstoffabscheider 21 mit dem Wasserstoffabscheider verbindende Pendelleitung 23b gebildet sein, welche unterhalb des Flüssigkeitsspiegels des Elektrolyten verläuft. Schließlich kann die genannte Leitungsverbindung auch innerhalb des Druckbehälters 12 einen dem Sauerstoffabscheider 21 zugeordneten Bereich des Elektrolytkreislaufs mit einen dem Wasserstoffabscheider 22 zugeordneten Bereich des Elektrolytkreislaufs verbinden, was in den Figuren 1a) und 1b) jedoch nicht dargestellt ist.

In dem in Figur 1a) dargestellten normalen Betriebszustand des Druckelektrolyseurs 11 wird der entstehende Sauerstoff im Sauerstoffabscheider 21 gesammelt und der entstehende Wasserstoff wird im Wasserstoffabscheider 22 gesammelt. Sowohl der Sauerstoffabscheider 21 als auch der Wasserstoffabscheider 22 sind jeweils teilweise, nämlich in einem unteren Bereich, mit dem Elektrolyten gefüllt, im oberen Bereich der Abscheider 21, 22 sammelt sich das jeweilige.Produktgas.

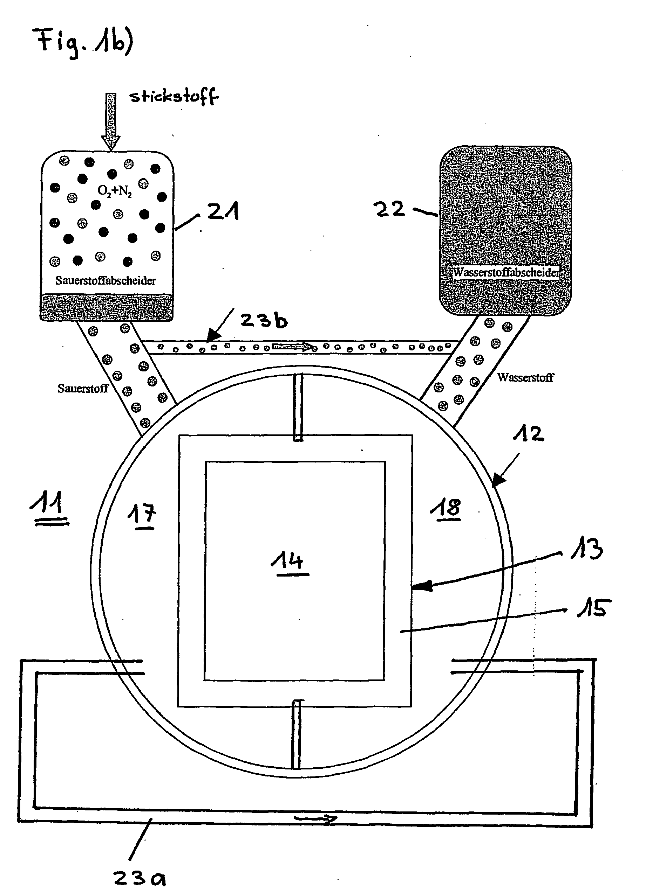

Wenn nun der Druckelektrolyseur 11 abgeschaltet werden soll, wird dem Sauerstoffabscheider 21, typischerweise in dem zum Sammeln des gasförmigen Sauerstoffs vorgesehenen oberen Volumenbereich desselben, das vorgehaltene Inertgas, also typischerweise Stickstoffgas, zugeführt. Über die in dem Elektrolytkreislauf vorgesehene Leitungsverbindung 23a bzw. 23b erfolgt eine Verschiebung eines Teils des Elektrolyten aus dem Sauerstoffabscheider 21 und/oder aus dem Druckbehälter 12 in den Wasserstoffabscheider 22 und bewirkt eine Verdrängung des gasförmigen Wasserstoffs aus demselben, wodurch eine Inertisierung des Druckelektrolyseurs 11 und des Wasserstoffabscheiders 22 erfolgt. Sinnvollerweise erfolgt diese Inertisierung erst, wenn im wesentlichen der gesamte gasförmige Wasserstoff aus dem Druckbehälter 12 in den Wasserstoffabscheider 22 aufgestiegen ist. Figur 1b) zeigt den Druckelektrolyseur 11 in abgeschaltetem, inertisiertem Zustand.

Bei dem in den Figuren 2a) und 2b) dargestellten Ausführungsbeispiel ist die Leitungsverbindung 43a; 43b, über welche ein Teil des Elektrolyten im Sinne einer Verdrängung des gasförmigen Wasserstoffs aus dem den Wasserstoffabscheider 42 bildenden Volumenbereich des Druckbehälters 32 verschiebbar ist, entweder durch eine außerhalb des Druckbehälters 32 verlaufende Leitungsverbindung 43a gebildet, die einen dem Sauerstoffabscheider 41 zugeordneten Volumenbereich des Druckbehälters 32, nämlich den einen Bestandteil des Anolytkreislaufs bildenden Raum 37, mit einem dem Wasserstoffabscheider 42 zugeordneten Volumenbereich des Druckbehälters 32, nämlich dem einen Teil des Katholytkreislaufs bildenden Raum 38, verbindet, oder es ist eine Leitungsverbindung 43b innerhalb des Druckbehälters 32 vorgesehen, welche einen dem Sauerstoffabscheider 41 zugeordneten Volumenbereich des Druckbehälters 32, nämlich den einen Bestandteil des Anolytkreislaufs bildenden Raum 37, mit einem dem Wasserstoffabscheider 42 zugeordneten Volumenbereich des Druckbehälters 32, nämlich dem einen Teil des Katholytkreislaufs bildenden Raum 38, miteinander verbindet. Diese Leitungsverbindung 43b ist typischerweise in der unterhalb des Elektrolysezellenblocks 33 vorgesehenen Trennwand 40 vorgesehen.

Bei einer Inertisierung des Elektrolyseurs 31 wird der den Sauerstoffabscheider 41 bildende Volumenbereich des Druckbehälters 32 mit dem vorgehaltenen Inertgas, typischerweise Stickstoff, beaufschlagt, wodurch der Elektrolyt über die Leitungsverbindung 43a bzw. 43b aus dem dem Sauerstoffabscheider 41 zugeordneten Volumenbereich des Druckbehälters 32, also aus dem Raum 37 des Anolytkreislaufs, in den dem Wasserstoffabscheider 42 zugeordneten Volumenbereich des Druckbehälters 32, also in den Raum 38 des Katholytkreislaufs, übergeführt wird bis der Wasserstoff vollständig aus dem den Wasserstoffabscheider 42 bildenden Volumenbereich des Druckbehälters 32 entfernt ist. Auch hier erfolgt die Inertisierung sinnvollerweise erst dann, wenn im wesentlichen der gesamte gebildete Wasserstoff im Wasserstoffabscheider 42, d.h. in dem entsprechenden Volumenbereich des Druckbehälters 32 gesammelt ist.

Das Verschieben des Elektrolytniveaus in den Wasserstoffabscheider 22 bzw. 42 kann bei allen Ausführungsbeispielen durch geeignete Mittel überwacht werden, beispielsweise durch Niveauwächter, welche einen Anstieg der Füllhöhe des Elektrolyten im Wasserstoffabscheider 22 bzw. 42 bis auf ein vorgegebenes Niveau überwachen.

Der bei der Inertisierung des Wasserstoffabscheiders 22 bzw. 42 verdrängte Wasserstoff kann gespeichert und weiter verwendet werden, er muss nicht verworfen werden, da er nicht mit dem zugeführten Inertgas vermischt ist.

Eine Anwendung der Erfindung ist bei allen Typen von Elektrolyseuren möglich, so zum Beispiel auch beim PEM-Elektrolyseur, der Wasser als Elektrolyt verwendet.

### Bezugszeichenliste

- 11; 31: Druckelektrolyseur
- 12; 32: Druckbehälter
- 13; 33: Elektrolysezellenblock
- 14; 34: Elektrolysezellen
- 15; 35: Gehäuse
- 17; 37: Raum für Anolytkreislauf
- 18; 38: Raum für Katholytkreislauf
- 29: Trennwand
- 40: Trennwand
- 21; 41: Sauerstoffabscheider
- 22; 42: Wasserstoffabscheider
- 23a; 43a: Leitungsverbindung
- 23b; 43b: Leitungsverbindung

## Patentansprüche

1. Druckelektrolyseur mit einem Druckbehälter (12; 32) und einem eine Anzahl von Elektrolysezellen (14; 34) enthaltenden, in dem Druckbehälter (12; 32) angeordneten Elektrolysezellenblock (13; 33), wobei die Elektrolysezellen (14; 34) jeweilige Anoden und Kathoden enthalten und ein Elektrolytkreislaufsystem zur Zuführung von Elektrolyt zu den Anoden und Kathoden vorgesehen ist, mit einem Sauerstoffabscheider (21; 41) zum Abscheiden des beim Betrieb des Druckelektrolyseurs (11; 31) entstehenden gasförmigen Sauerstoffs und einem Wasserstoffabscheider (22; 42) zum Abscheiden des beim Betrieb des Druckelektrolyseurs (11; 31) entstehenden gasförmigen Wasserstoffs, und mit einem Vorrat eines inerten Gases, insbesondere Stickstoff, zum Inertisieren des Druckelektrolyseurs (11; 31) bei seiner Abschaltung, **dadurch gekennzeichnet, dass** der Inertgasvorrat dem Sauerstoffabscheider (21; 41) zuführbar ist, und dass das Elektrolytkreislaufsystem eine Leitungsverbindung (23a; 23b; 43a; 43b) enthält, über die bei Beaufschlagung des Sauerstoffabscheiders (21; 41) mit dem Inertgas ein Teil des Elektrolyten im Sinne einer Verdrängung des gasförmigen Wasserstoffs aus dem Wasserstoffabscheider (22; 42) verschiebbar ist.

2. Druckelektrolyseur nach Anspruch 1, **dadurch gekennzeichnet, dass** der Sauerstoffabscheider (21) und/oder der Wasserstoffabscheider (22) außerhalb des Druckbehälters (12) vorgesehen ist, und dass bei Beaufschlagung des Sauerstoffabscheiders (21) mit dem Inertgas ein Teil des Elektrolyten zur Verdrängung des Wasserstoffs aus dem Wasserstoffabscheider (22) von dem Druckbehälter (12) und/oder von dem Sauerstoffabscheider (21) in den Wasserstoffabscheider (22) verschiebbar ist.

3. Druckelektrolyseur nach Anspruch 1, **dadurch gekennzeichnet, dass** der Sauerstoffabscheider (41) und/oder der Wasserstoffabscheider (42) durch einen Teil des Volumens innerhalb des Druckbehälters.(32) gebildet ist, und dass bei Beaufschlagung des Sauerstoffabscheiders (41) mit dem Inertgas ein Teil des Elektrolyten zur Verdrängung des Wasserstoffs in den den Wasserstoffabscheider (42) bildenden Teil des Druckbehältervolumens verschiebbar ist.

4. Druckelektrolyseur nach Anspruch 1, 2 oder 3, **dadurch gekennzeichnet, dass** die Leitungsverbindung (23a; 23b; 43a), über die ein Teil des Elektrolyten im Sinne einer Verdrängung des Wasserstoffs aus dem Wasserstoffabscheider (22; 42) verschiebbar ist, außerhalb des Druckbehälters (12; 32) vorgesehen ist.

5. Druckelektrolyseur nach Anspruch 4 in Verbindung mit Anspruch 2, **dadurch gekennzeichnet, dass** die Leitungsverbindung (23b) durch eine unterhalb des Flüssigkeitsspiegels des Elektrolyten verlaufende, den Sauerstoffabscheider (21) mit dem Wasserstoffabscheider (22) verbindende Pendelleitung (23b) gebildet ist.

6. Druckelektrolyseur nach Anspruch 1, 2 oder 3, **dadurch gekennzeichnet, dass** die Leitungsverbindung (43b), über die ein Teil des Elektrolyten im Sinne einer Verdrängung des Wasserstoffs aus dem Wasserstoffabscheider (42) verschiebbar ist, innerhalb des Druckbehälters (32) vorgesehen ist.

7. Druckelektrolyseur nach einem der Ansprüche 1 bis 6, **dadurch gekennzeichnet, dass** das Gehäuse (35) des Elektrolysezellenblocks (33) zusammen mit dem Druckbehälter (32) mindestens zwei voneinander getrennte Räume (37, 38) bildet, welche Bestandteil des Elektrolytkreislaufssystems sind und die durch das Gehäuse (35) gegen die Elektrolysezellen (34) und durch den Druckbehälter (32) gegen die Umgebung begrenzt sind, wobei einer der voneinander getrennten Räume (37) Bestandteil eines Anolytkreislaufs und mit dem Sauerstoffabscheider (41) verbunden ist und ein anderer der voneinander getrennten Räume (38) Bestandteil eines Katholytkreislaufs und mit dem Wasserstoffabscheider (42) verbunden ist.

8. Druckelektrolyseur nach Anspruch 7, **dadurch gekennzeichnet, dass** die voneinander getrennten Räume (37, 38) durch Trennwände (39, 40) voneinander getrennt sind, die sich zwischen dem Gehäuse (35) des Elektrolysezellenblocks (33) und dem Druckbehälter (32) erstrecken, und dass die Leitungsverbindung (43b), über die ein Teil des Elektrolyten im Sinne einer Verdrängung des Wasserstoffs aus dem Wasserstoffabscheider (42) verschiebbar ist, durch einen Durchgang in einem unterhalb des Flüssigkeitsspiegels des Elektrolyten bildenden Bereich der Trennwände (39, 40) gebildet ist.

9. Verfahren zum Abschalten eines Druckelektrolyseurs, der einen Druckbehälter (12, 32) und einen eine Anzahl von Elektrolysezellen (14; 34) enthaltenden, in dem Druckbehälter (12; 22) angeordneten Elektrolysezellenblock (13; 33) umfasst, wobei die Elektrolysezellen (14; 34) jeweilige Anoden und Kathoden enthalten und ein Elektrolytkreislaufsystem zur Zuführung von Elektrolyt zu den Anoden und Kathoden und ein Sauerstoffabscheider (21; 41) zum Abscheiden des beim Betrieb des Druckelektrolyseurs (11; 31) entstehenden gasförmigen Sauerstoffs und ein Wasserstoffabscheider (22; 42) zum Abscheiden des beim Betrieb des Druckelektrolyseurs (11; 31) entstehenden gasförmigen Wasserstoffs vorgesehen ist, wobei dem Druckelektrolyseur (11; 31) zum Inertisieren bei seiner Abschaltung ein inertes Gas, insbesondere Stickstoff, zugeführt wird, **dadurch gekennzeichnet, dass** das Inertgas dem Sauerstoffabscheider (21; 41) zugeführt wird, und dass bei Beaufschlagung des Sauerstoffabscheiders (21; 41) mit dem Inertgas ein Teil des Elektrolyten über eine in dem Elektrolytkreislaufsystem (23a; 23b; 43a; 43b) enthaltene Leitungsverbindung im Sinne einer Verdrängung des gasförmigen Wasserstoffs aus dem Wasserstoffabscheider (22; 42) verschoben wird.

10. Verfahren nach Anspruch 9, **dadurch gekennzeichnet, dass** der Sauerstoffabscheider (21) und/oder der Wasserstoffabscheider (22) außerhalb des Druckbehälters (12) vorgesehen ist, und dass bei Beaufschlagung des Sauerstoffabscheiders (21) mit dem Inertgas ein Teil des Elektrolyten zur Verdrängung des Wasserstoffs aus dem Wasserstoffabscheider (22) von dem Druckbehälter (12) und/oder von dem Sauerstoffabscheider (21) in den Wasserstoffabscheider (22) verschoben wird.

11. Verfahren nach Anspruch 9, **dadurch gekennzeichnet, dass** der Sauerstoffabscheider (41) und/oder der Wasserstoffabscheider (42) durch einen Teil des Volumens innerhalb des Druckbehälters (32) gebildet ist, und dass bei Beaufschlagung des Sauerstoffabscheiders (41) mit dem Inertgas ein Teil des Elektrolyten zur Verdrängung des Wasserstoffs in den den Wasserstoffabscheider (42) bildenden Teil des Druckbehältervolumens verschoben wird.

## Claims

1. Pressure electrolyzer having a pressure container (12; 32) and having an electrolysis cell block (13; 33) which contains a number of electrolysis cells (14; 34) and is arranged in the pressure container (12; 32), with the electrolysis cells (14; 34) containing respective anodes and cathodes, and with an electrolyte circulation system being provided for supplying electrolyte to the anodes and cathodes, having an oxygen separator (21; 41) for separation of the gaseous oxygen which is created during operation of the pressure electrolyzer (11; 31) and having a hydrogen separator (22; 42) for separation of the gaseous hydrogen which is created during operation of the pressure electrolyzer (11; 31), and having a supply of an inert gas, in particular nitrogen, for making the pressure electrolyzer (11; 31) inert when it is switched off, **characterized in that** the inert gas supply can be supplied to the oxygen separator (21; 41), and **in that** the electrolyte circulation system contains a line connection (23a; 23b; 43a; 43b) via which, when the inert gas is applied to the oxygen separator (21; 41), some of the electrolyte can be moved, in the sense of forcing the gaseous hydrogen out of the hydrogen separator (22; 42).

2. Pressure electrolyzer according to Claim 1, **characterized in that** the oxygen separator (21) and/or the hydrogen separator (22) are/is provided outside the pressure container (12), and **in that**, when the inert gas is applied to the oxygen separator (21), some of the electrolyte can be moved, in order to force hydrogen out of the hydrogen separator (22), from the pressure container (12) and/or from the oxygen separator (21) into the hydrogen separator (22).

3. Pressure electrolyzer according to Claim 1, **characterized in that** the oxygen separator (41) and/or the hydrogen separator (42) are/is formed by a part of the volume within the pressure container (32), and **in that**, when the inert gas is applied to the oxygen separator (41), some of the electrolyte can be moved in order to force the hydrogen into the part of the pressure container volume which forms the hydrogen separator (42).

4. Pressure electrolyzer according to Claim 1, 2 or 3, **characterized in that** the line connection (23a; 23b; 43a) via which some of the electrolyte can be moved in the sense of forcing the hydrogen out of the hydrogen separator (22; 42) is provided outside the pressure container (12; 32).

5. Pressure electrolyzer according to Claim 4 in conjunction with Claim 2, **characterized in that** the line connection (23b) is formed by an oscillating line (23b), which runs underneath the liquid level of the electrolyte and connects the oxygen separator (21) to the hydrogen separator (22).

6. Pressure electrolyzer according to Claim 1, 2 or 3, **characterized in that** the line connection (43b) via which some of the electrolyte can be moved in the sense of forcing the hydrogen out of the hydrogen separator (42) is provided within the pressure container (32).

7. Pressure electrolyzer according to one of Claims 1 to 6, **characterized in that** the housing (35) of the electrolysis cell block (33) together with the pressure container (32) forms at least two spaces (37, 38) which are separated from one another, are a component of the electrolyte circulation system and are bounded by the housing (35) with respect to the electrolysis cells (34) and are bounded by the pressure container (32) with respect to the environment, with one of the spaces (37) which are separated from one another being a component of an anolyte circuit and being connected to the oxygen separator (41), and with another of the spaces (38) which are separated from one another being a component of a catholyte circuit and being connected to the hydrogen separator (42).

8. Pressure electrolyzer according to Claim 7, **characterized in that** the spaces (37, 38) which are separated from one another are separated from one another by partition walls (39, 40) which extend between the housing (35) of the electrolysis cell block (33) and the pressure container (32), and **in that** the line connection (43b) via which some of the electrolyte can be moved in the sense of forcing hydrogen out of the hydrogen separator (42) is formed by an aperture in an area of the partition walls (39, 40) which is formed underneath the liquid level of the electrolyte.

9. Method for switching off a pressure electrolyzer which comprises a pressure container (12, 32) and an electrolysis cell block (13; 33) which contains a number of electrolysis cells (14; 34) and is arranged in the pressure container (12; 32), with the electrolysis cells (14; 34) containing respective anodes and cathodes, and with an electrolyte circulation system for supplying electrolyte to the anodes and cathodes, having an oxygen separator (21; 41) for separation of the gaseous oxygen which is created during operation of the pressure electrolyzer (11; 31), and having a hydrogen separator (22; 42) for separation of the gaseous hydrogen which is created during operation of the pressure electrolyzer (11; 31), with an inert gas, in particular nitrogen, being supplied to the pressure electrolyzer (11; 31) in order to make it inert when it is switched off, **characterized in that** the inert gas is supplied to the oxygen separator (21; 41), and **in that**, when the inert gas is applied to the oxygen separator (21; 41), some of the electrolyte is moved via a line connection, which is contained in the electrolyte circulation system (23a; 23b; 43a; 43b), in the sense of forcing the gaseous hydrogen out of the hydrogen separator (22; 42).

10. Method according to Claim 9, **characterized in that** the oxygen separator (21) and/or the hydrogen separator (22) are/is provided outside the pressure container (12), and **in that**, when the inert gas is applied to the oxygen separator (21), some of the electrolyte is moved, in order to force hydrogen out of the hydrogen separator (22), from the pressure container (12) and/or from the oxygen separator (21) into the hydrogen separator (22).

11. Method according to Claim 9, **characterized in that** the oxygen separator (41) and/or the hydrogen separator (42) are/is formed by a part of the volume within the pressure container (32), and **in that**, when the inert gas is applied to the oxygen separator (41), some of the electrolyte is moved in order to force the hydrogen into the part of the pressure container volume which forms the hydrogen separator (42).

## Revendications

1. Dispositif d'électrolyse sous pression, qui présente un récipient sous pression (12; 32) et un bloc (13; 33) de cellules d'électrolyse qui contient plusieurs cellules d'électrolyse (14, 34) et qui est disposé dans le récipient sous pression (12; 32), les cellules d'électrolyse (14; 34) contenant des anodes et des cathodes et un circuit de recirculation d'électrolyte étant prévu pour amener l'électrolyte aux anodes et aux cathodes, un séparateur d'oxygène (21; 41) qui sépare l'oxygène gazeux dégagé lorsque le dispositif d'électrolyse sous pression (11; 31) fonctionne et un séparateur d'hydrogène (22; 42) qui sépare l'hydrogène gazeux dégagé lorsque le dispositif d'électrolyse sous pression (11; 31) fonctionne, et une réserve de gaz inerte, en particulier d'azote, qui rend inerte le dispositif (11; 31) d'électrolyse sous pression lorsqu'il est débranché, **caractérisé en ce que** la réserve de gaz inerte peut être amenée au séparateur d'oxygène (21; 41) et **en ce que** le système de recirculation d'électrolyte contient un conduit de raccordement (23a; 23b; 43a; 43b) par lequel, lorsque le séparateur d'oxygène (21; 41) reçoit du gaz inerte, une partie de l'électrolyte peut être déplacée dans le sens d'un refoulement de l'hydrogène gazeux hors du séparateur d'hydrogène (22; 42).

2. Dispositif d'électrolyse sous pression selon la revendication 1, **caractérisé en ce que** le séparateur d'oxygène (21) et/ou le séparateur d'hydrogène (22) sont prévus à l'extérieur du récipient sous pression (12) et **en ce que** lorsque du gaz inerte est injecté dans le séparateur d'oxygène (21), une partie de l'électrolyte est déplacée du récipient sous pression (12) et/ou du séparateur d'oxygène (21) jusque dans le séparateur d'hydrogène (22) pour refouler l'hydrogène hors du séparateur d'hydrogène (22).

3. Dispositif d'électrolyse sous pression selon la revendication 1, **caractérisé en ce que** le séparateur d'oxygène (41) et/ou le séparateur d'hydrogène (42) sont formés par une partie du volume intérieur du récipient sous pression (32) et **en ce que** lorsque du gaz inerte est injecté dans le séparateur d'oxygène (41), une partie de l'électrolyte peut être déplacée pour refouler l'hydrogène dans la partie du volume du récipient sous pression qui forme le séparateur d'hydrogène (42).

4. Dispositif d'électrolyse sous pression selon les revendications 1, 2 ou 3, **caractérisé en ce que** le conduit de liaison (23a; 23b; 43a) par lequel une partie de l'électrolyte peut être déplacée en vue de refouler l'hydrogène hors du séparateur d'hydrogène (22; 42) est prévu à l'extérieur du récipient sous pression (12; 32).

5. Dispositif d'électrolyse sous pression selon la revendication 4 et en association à la revendication 2, **caractérisé en ce que** le conduit de liaison (23b) est formé par un conduit pendulaire (23b) qui s'étend en dessous du niveau de liquide de l'électrolyte et qui relie le séparateur d'oxygène (21) au séparateur d'hydrogène (22).

6. Dispositif d'électrolyse sous pression selon les revendications 1, 2 ou 3, **caractérisé en ce que** le conduit de liaison (43b) par lequel une partie de l'électrolyte peut être déplacée en vue de refouler l'hydrogène hors du séparateur d'hydrogène (42) est prévu à l'intérieur du récipient sous pression (32).

7. Dispositif d'électrolyse sous pression selon l'une des revendications 1 à 6, **caractérisé en ce que** le boîtier (35) du bloc (33) de cellules d'électrolyse forme avec le récipient sous pression (32) au moins deux espaces (37, 38) séparés l'un de l'autre qui font partie du système de recirculation d'électrolyte et qui sont séparés de l'environnement par le boîtier (35) des cellules d'électrolyse (34) et par le récipient sous pression (32), un (37) des espaces séparés l'un de l'autre faisant partie d'un circuit d'anolyte et étant relié au séparateur d'oxygène (41) et l'autre (38) des espaces séparés l'un de l'autre faisant partie du circuit de catholyte et étant relié au séparateur d'hydrogène (42).

8. Dispositif d'électrolyse sous pression selon la revendication 7, **caractérisé en ce que** les espaces (37, 38) séparés l'un de l'autre sont séparés l'un de l'autre par des parois de séparation (39, 40) qui s'étendent entre le boîtier (35) du bloc (33) de cellules d'électrolyse et le récipient sous pression (32) et **en ce que** le conduit de liaison (43b) par lequel une partie de l'électrolyte peut être déplacée en vue de refouler l'hydrogène hors du séparateur d'hydrogène (42) est formé par un passage situé en dessous de la partie des parois de séparation (39, 40) située en dessous du niveau de liquide de l'électrolyte.

9. Procédé de débranchement d'un dispositif d'électrolyse sous pression qui comprend un récipient sous pression (12; 32) et un bloc (13; 33) de cellules d'électrolyse qui contient plusieurs cellules d'électrolyse (14, 34) et qui est disposé dans le récipient sous pression (12; 32), les cellules d'électrolyse (14; 34) contenant des anodes et des cathodes et un circuit de recirculation d'électrolyte étant prévu pour amener l'électrolyte aux anodes et aux cathodes, un séparateur d'oxygène (21; 41) qui sépare l'oxygène gazeux dégagé lorsque le dispositif d'électrolyse sous pression (11; 31) fonctionne et un séparateur d'hydrogène (22; 42) qui sépare l'hydrogène gazeux dégagé lorsque le dispositif d'électrolyse sous pression (11; 31) fonctionne, un gaz inerte et en particulier de l'azote étant amené au dispositif (11; 31) d'électrolyse sous pression pour le rendre inerte lors de son débranchement, **caractérisé en ce que** le gaz inerte est amené au séparateur d'oxygène (21; 41) et **en ce que** lorsque du gaz inerte est apporté dans le séparateur d'oxygène (21; 41), une partie de l'électrolyte est déplacée par un conduit de liaison contenu dans le système (23a; 23b; 43a; 43b) de recirculation d'électrolyte pour refouler l'hydrogène gazeux hors du séparateur d'hydrogène (22; 42).

10. Procédé selon la revendication 9, **caractérisé en ce que** le séparateur d'oxygène (21) et/ou le séparateur d'hydrogène (22) sont prévus à l'extérieur du récipient sous pression (12) et **en ce que** lorsque le séparateur d'oxygène (21) reçoit du gaz inerte, une partie de l'électrolyte est déplacée du récipient sous pression (12) et/ou du séparateur d'oxygène (21) jusque dans le séparateur d'hydrogène (22) pour refouler l'hydrogène hors du séparateur d'hydrogène (22).

11. Procédé selon la revendication 9, **caractérisé en ce que** le séparateur d'oxygène (41) et/ou le séparateur d'hydrogène (42) sont formés par une partie du volume intérieur du récipient sous pression (32) et **en ce que** lorsque du gaz inerte est envoyé dans le séparateur d'oxygène (41), une partie de l'électrolyte est déplacée de manière à refouler l'hydrogène dans la partie du volume du récipient sous pression qui forme le séparateur d'hydrogène (42).
